# EUROPÄISCHE PATENTSCHRIFT

(11) **EP 0 589 350 B1**
(45) Veröffentlichungstag und Bekanntmachung des Hinweises auf die Patenterteilung: **29.01.1997**
(21) Anmeldenummer: 93114892.8
(22) Anmeldetag: 16.09.1993
(51) Int. Cl.: C08F 10/00, C08F 4/24, C08F 4/02

(54) **Verfahren zur Herstellung eines Trägerkatalysators für die Polymerisation von a-Olefinen**
Process for the preparation of a supported catalyst for the polymerisation of alpha - olefins
Procédé de préparation d'un catalyseur supporté pour la polymérisation d'alpha-oléfines

(30) Priorität: 23.09.1992 DE 4231749
(43) Veröffentlichungstag der Anmeldung: 30.03.1994
(73) Patentinhaber: BASF Aktiengesellschaft, 67063 Ludwigshafen (DE)
(72) Erfinder: Mueller, Hans-Joachim, Dr., D-6718 Gruenstadt (DE); Follmer, Godofredo, Dr., D-6701 Maxdorf (DE); Konrad, Rainer, Dr., D-6701 Goennheim (DE); Saive, Roland, Dr., D-6700 Ludwigshafen (DE); Lux, Martin, Dr., D-6701 Dannstadt-Schauernheim (DE); Goertz, Hans-Helmut, Dr., D-6713 Freinsheim (DE); Funk, Guido, Dr., D-6520 Worms 1 (DE)

(56) Entgegenhaltungen:
- EP-A- 0 429 937
- EP-A- 0 535 516
- FR-A- 2 291 985
- US-A- 3 509 116

## Beschreibung

Die vorliegende Erfindung betrifft ein Verfahren zur Herstellung eines Trägerkatalysators für die Polymerisation von α-Olefinen, bei welchem man
(1) ein Siliciumdioxid enthaltendes Trägergel herstellt, indem man
   (1.1) in einen unter Drall stehenden Strom einer wäßrigen Mineralsäure längs sowie tangential zum Strom eine Natrium- oder Kaliumwasserglaslösung einbringt, das dabei entstehende Kieselsäure-Hydrosol in ein gasförmiges Medium tropfenförmig versprüht, zum Hydrogel erstarren läßt und das so erhaltene Hydrogel ohne vorherige Alterung durch Waschen von Salzen befreit,
   (1.2) das aus (1.1) resultierende Hydrogel trocknet, wobei die Trägergel-Bildung erfolgt, und
(2) das Trägergel (1) mit Chromtrioxid oder einer unter den Bedingungen des Verfahrensschritts (3) in Chromtrioxid überführbaren Chromverbindung belädt, wodurch ein chromhaltiges Trägergel entsteht, und
(3) das chromhaltige Trägergel (2) in einem wasserfreien, Sauerstoff in einer Konzentration von über 10 Vol.-% enthaltenden Gasstrom während 10 bis 1000 Minuten auf 400 bis 1100°C erhitzt.

Das eingangs genannte Verfahren zur Herstellung eines Trägerkatalysators für die Polymerisation von α-Olefinen ist bis auf die erfindungsgemäße Verbesserung aus der EP-A 0 429 937 bekannt. Für dieses bekannte Verfahren ist es wesentlich, daß man die aus dem Verfahrensschritt (1.1) resultierenden Hydrogele bei maximal 180°C unter einem Vakuum von 13,3 mbar so lange trocknet, bis kein Gewichtsverlust mehr auftritt. Hierbei sind Trocknungszeiten von mehreren Stunden notwendig.

Weiterhin ist aus der EP-A-0 535 516 ebenfalls ein Verfahren zur Herstellung eines Trägerkatalysators für die Polymerisation von α-Olefinen bekannt, bei dem die Trocknungszeit der für die Herstellung des Trägerkatalysators erforderlichen Trägergele auf einige Sekunden verringert werden kann. Die Trocknung erfolgt dabei in einem Schnelltrockner bei einer Eingangstemperatur von 200 bis 600°C. Mit Hilfe derartig hergestellter Trägerkatalysatoren sind Polymere von α-Olefinen mit verbesserter Tieftemperaturzähigkeit und Verarbeitbarkeit erhältlich.

Die in der EP-A 0 429 937 und der EP-A-0 535 516 beschriebenen Trocknungsmethoden zur Herstellung der Trägergele sind nicht formgebend, was zur Folge hat, daß die daraus erhaltenen Träger entweder als splittrige Bruchstücke aus zerplatzendem Hydrogel (EP-A 0 429 937) oder als Partikel mit nicht definierter Morphologie anfallen (EP-A-0 535 516), die anschließend noch vermahlen werden müssen. Die bei diesem Mahlprozeß anfallenden Partikel mit Teilchengrößen von weniger als 30 µm sind im Polymerisationsprozeß unerwünscht, da sie für die Bildung von Polymerfeinstaub verantwortlich sind. Zur Beseitigung dieses Feinstaubes, der ca. 20 % der gesamten Trägermenge ausmacht, muß dieser durch Siebung abgetrennt und anschließend verworfen werden, was mit einem nicht unerheblichen verfahrenstechnischen Mehraufwand verbunden ist.

Aufgabe der vorliegenden Erfindung war es, ein neues Verfahren zu finden, welches die Herstellung eines Trägerkatalysators für die Polymerisation von α-Olefinen in besonders einfacher und zuverlässiger Weise unter Vermeidung der geschilderten Nachteile gestattet, wobei sich der neue Trägerkatalysator u.a. durch eine hohe Produktivität auszeichnen sollte und sich darüber hinaus insbesondere zur Herstellung von hochmolekularen und gut verarbeitbaren Polymerisaten von α-Olefinen mit sehr guter Morphologie eignen sollte.

Ausgehend von dem vorstehend zitierten Stand der Technik wurde diese Aufgabe in nicht vorhersehbarer Weise elegant dadurch gelöst, daß man die Trocknung der für die Herstellung des Trägerkatalysators erforderlichen Hydrogele modifizierte.

Demgemäß handelt es sich bei der vorliegenden Erfindung um ein neues Verfahren zur Herstellung eines Trägerkatalysators für die Polymerisation von α-Olefinen, bei welchem man
(1) ein Siliciumdioxid enthaltendes Trägergel herstellt, indem man
   (1.1) in einen unter Drall stehenden Strom einer wäßrigen Mineralsäure längs sowie tangential zum Strom eine Natrium- oder Kaliumwasserglaslösung einbringt, das dabei entstehende Kieselsäure-Hydrosol in ein gasförmiges Medium tropfenförmig versprüht, zum Hydrogel erstarren läßt und das so erhaltene Hydrogel ohne vorherige Alterung durch Waschen von Salzen befreit,
   (1.2) das aus (1.1) resultierende Hydrogel trocknet, wobei die Trägergel-Bildung erfolgt, und
(2) das Trägergel (1) mit Chromtrioxid oder einer unter den Bedingungen des Verfahrensschritts (3) in Chromtrioxid überführbaren Chromverbindung belädt, wodurch ein chromhaltiges Trägergel entsteht, und
(3) das chromhaltige Trägergel (2) in einem wasserfreien, Sauerstoff in einer Konzentration von über 10 Vol.-% enthaltenden Gasstrom während 10 bis 1000 Minuten auf 400 bis 1100°C erhitzt,
wobei das Verfahren dadurch gekennzeichnet ist, daß man das aus dem Verfahrensschritt (1.1) resultierende Hydrogel im Verfahrensschritt (1.2) innerhalb einer Zeit von nicht mehr als 60 Sekunden in einem formgebenden Sprüh- oder Sprühwirbelschichttrockner- nach stehend kurt als form gebendes Schnelltrockner bezeichnet bei einer Eingangstemperatur von 80 bis 400°C trocknet.

Im folgenden wird das Verfahren zur Herstellung eines Trägerkatalysators für die Polymerisation von α-Olefinen der Kürze halber als "erfindungsgemäßes Verfahren" bezeichnet.

Das erfindungsgemäße Verfahren geht dabei von der Herstellung des siliciumdioxidhaltigen Trägergels (1) aus (Verfahrensschritt 1).

Zu diesem Zweck wird zunächst Gas aus der DE-B 25 40 278 bekannte Kieselsäure-Hydrogel hergestellt (Verfahrensschritt 1.1). Dieses bekannte Kieselsäure-Hydrogel weist im allgemeinen einen Feststoffgehalt von 10 bis 25 Gew.-% (berechnet als Siliciumdioxid oder Aluminiumsiliciumoxid) auf. Im allgemeinen ist es kugelförmig mit einem Teilchendurchmesser im Bereich von 1 bis 8 mm. Es wird erhalten, indem man in einen unter Drall stehenden Strom einer wäßrigen Mineralsäure längs sowie tangential zum Strom eine Natrium- oder Kaliumwasserglaslösung einbringt, das dabei entstehende Kieselsäure-Hydrosol in ein gasförmiges Medium tropfenförmig versprüht, zum Hydrogel erstarren läßt und das so erhaltene weitgehend kugelförmige Hydrogel ohne vorherige Alterung durch Waschen von Salzen befreit.

Die wäßrige Mineralsäure kann noch Aluminiumionen enthalten. Sofern in der wäßrigen Mineralsäure Aluminiumionen vorhanden sein sollen, werden sie in einer Menge angewandt, welche einen Al₂O₃-Gehalt des Trägergels (1) von 1 bis 15 Gew.-% bewirkt.

Nach einer bevorzugten Variante des erfindungsgemäßen Verfahrens können bis maximal 95 Gew.-% des in den Hydrogelen enthaltenen Wassers extrahiert werden. Die Bezeichnung Hydrogele bezieht sich dabei auf die aus dem Verfahrensschritt (1.1) resultierenden Hydrogele. Für diesen weiteren Verfahrensschritt (1.1.1), der noch vor der Trocknung (1.2) vorgenommen werden sollte, kommen vor allem organische Lösungsmittel in Betracht. Beispiele geeigneter organischer Lösungsmittel sind insbesondere C₁- bis C₄-Alkohole, wie Methanol, Ethanol, Isopropanol und tert.-Butanol, C₃- bis C₅-Ketone, wie Aceton oder Butanon sowie Gemische aus diesen Lösungsmitteln. Vorteilhafterweise werden bei einer Extraktion nach dem Verfahrensschritt (1.1.1) 0,1 bis 60 Gew.-%, insbesondere 1 bis 50 Gew.-%, des im Hydrogel enthaltenen Wassers extrahiert. Methodisch gesehen weist die Extraktion des Wassers keine Besonderheiten auf, sondern kann in den üblichen und bekannten Extraktionsvorrichtungen wie Säulenextraktoren erfolgen. Außerdem ist es für die Extraktion von Vorteil, dem Lösungsmittel vor dem Extrahieren bis zu 50 Vol.-% Wasser zuzusetzen, sofern dies ohne Entmischung möglich ist.

Erfindungsgemäß wird das aus dem Verfahrensschritt (1.1) oder (1.1.1) resultierende Hydrogel in einem formgebenden Schnelltrockner bei einer Eingangstemperatur von 80 bis 400°C getrocknet (Verfahrensschritt 1.2). Als formgebende Schnelltrockner werden die in der Technik bekannten formgebenden Sprühtrockner trockner verwendet. Bei den formgebenden Schnelltrocknern kann es sich aber auch um formgebende Sprühwirbelschichttrockner handeln. Nach dem erfindungsgemäßen Verfahren sollte die Trocknungszeit im Verfahrensschritt (1.2) nicht mehr als 60 Sekunden, insbesondere nicht mehr als 30 Sekunden betragen. Als besonders vorteilhaft erweisen sich Trocknungszeiten von weniger als 8 Sekunden.

Die Trocknungstemperaturen an der Einspritzdüse des im Verfahrensschritt (1.2) verwendeten formgebenden Schnelltrockners sollten im Bereich von 80 bis 400°C, insbesondere im Bereich von 100 bis 350°C liegen. Bevorzugt werden dazu formgebende Sprühtrockner mit einer Höhe von mindestens 1,5 Metern und einem Rohrdurchmesser von 0,5 bis 2 Metern verwendet. Im allgemeinen arbeiten derartige formgebende Sprühtrockner mit einem Gasdurchsatz an Brenngas oder Heizluft in der Größenordnung von 100 bis 2000 kg/h, insbesondere bei 200 bis 1500 kg/h. Vorteilhaft wird das zu trocknende Hydrogel über eine mit etwa 10000 Umdrehungen pro Minute rotierende Scheibe versprüht, wobei die rotierende Scheibe üblicherweise einen Durchmesser von 150 bis 300 mm aufweist. Derartige formgebende Schnelltrockner sind in der Technik bekannt. Vorzugsweise wird das bei der Trocknung (Verfahrensschritt 1.2) resultierende Trägergel nach dem Durchlaufen des formgebenden Schnelltrockners in Abscheidungsvorrichtungen, beispielsweise in Zyklonen abgeschieden. Die resultierenden Trägergele können anschließend noch in Mahlapparaturen, beispielsweise Mühlen, zerkleinert werden.

Weiterhin kann es sich empfehlen, die aus den Verfahrensschritten (1.2) erhaltenen Trägergele noch vor ihrer Beladung mit Chromtrioxid oder mit einer in Chromtrioxid überführbaren Chromverbindung (im Verfahrensschritt (2)) zu klassieren (Verfahrensschritt 1.2.1). Dies kann dabei in den üblichen Klassierapparaturen, beispielsweise in geeigneten Siebvorrichtungen, erfolgen.

Die aus den Verfahrensschritten (1.2) oder (1.2.1) erhältlichen Trägergele fallen im wesentlichen als sphärische Teilchen mit einem Durchmesser von 10 bis 300 µm, insbesondere von 50 bis 150 µm an. Vorteilhafte Trägergele haben eine Oberfläche von 100 bis 1000 m²/g, insbesondere von 200 bis 600 m²/g und ein Porenvolumen von 0,5 bis 2,5 cm³/g, insbesondere von 0,8 bis 2,0 cm³/g. Der Porenradius dieser Trägergele liegt im allgemeinen bei 40 bis 200 Angström, insbesondere bei 40 bis 140 Angström.

Die in erfindungsgemäßer Weise erhaltenen Trägergele eignen sich hervorragend für die Herstellung eines Katalysators.

Dazu werden die in der vorstehend beschriebenen Weise hergestellten Trägergele im Verfahrensschritt (2) nach bekannten Methoden, wie sie beispielsweise in der DE-B 25 40 278 oder der DE-A 36 40 802 beschrieben werden, mit Chromtrioxid oder einer Chromverbindung beladen, welche unter den Bedingungen des nachstehend im Detail beschriebenen Verfahrensschritts (3) in Chromtrioxid überführt werden kann. Die Beladung erfolgt bei einem Gewichtsverhältnis Trägergel : Chrom von 100:0,1 bis 100:10, insbesondere von 100:0,3 bis 100:3.

Vorteilhafterweise wird hierbei das Trägergel (1) in einer Lösung von Chromtrioxid oder einer unter den Bedingungen des Verfahrensschritts (3) in Chromtrioxid überführbaren Verbindung suspendiert, wonach man unter möglichst homogener Durchmischung der Suspension deren flüssige Bestandteile wie Alkohole und/oder Ketone sowie gegebenenfalls noch Wasser verdampft. Vorzugsweise werden hierbei Temperaturen von 20 bis 150°C und Drücke von 10 mbar bis 1 bar eingehalten. Hierbei erweist es sich als vorteilhaft, wenn das chromhaltige Trägergel (2) noch eine gewisse Restfeuchte aufweist. Allerdings sollen die flüchtigen Bestandteile nicht mehr als 20, insbesondere nicht mehr als 10 Gew.-%, bezogen auf das Trägergel (2), betragen.

Beispiele geeigneter Chromverbindungen sind außer Chromtrioxid und Chromhydroxid Salze des dreiwertigen Chroms mit organischen und anorganischen Säuren wie Chromacetat, -oxalat, -sulfat und -nitrat sowie Chelate des dreiwertigen Chrom wie Chromacetylacetonat. Von diesen sind die Verbindungen bevorzugt, welche im Verfahrensschritt (3) rückstandsfrei in Chromtrioxid übergehen. Von diesen wiederum wird Chrom(III)nitrat-9-hydrat ganz besonders bevorzugt verwendet.

Bei der Herstellung des chromhaltigen Trägergels (2) können auf das aus dem Verfahrensschritt (1) resultierende Trägergel noch anorganische fluoridhaltige Verbindungen aufgetragen werden. Beispiele geeigneter anorganischer fluoridhaltiger Verbindungen sind Lithium-, Natrium- und Kaliumfluorid sowie Azmonium-, Natrium- und Kaliumhexafluorsilikat, von denen Ammoniumhexafluorsilikat besonders vorteilhaft ist. Hierbei können die anorganischen fluoridhaltigen Verbindungen als Lösung oder als Feststoffe aufgetragen werden. Vorteilhafterweise werden sie in einer Menge aufgetragen, daß ein Gehalt der chromhaltigen Trägergele (2) an Fluorid von 0,1 bis 3,2 Gew.-% resultiert.

Weiterhin können bei der Herstellung des chromhaltigen Trägergels (2) auch noch eine Reihe phosphororganischer Verbindungen, wie beispielsweise Triethyl- oder Triphenylester der Phosphorsäure zudotiert werden. Das Aufbringen dieser Verbindungen auf das Trägergel erfolgt am günstigsten aus einer alkoholischen Lösung, beispielsweise aus Methanol. Vorteilhafterweise werden die phosphororganischen Verbindungen in einer solchen Menge aufgetragen, daß der Gehalt der chromhaltigen Trägergele (2) an Phosphor 0,1 bis 2,5 Gew.-% beträgt.

Im Verfahrensschritt (3) des erfindungsgemäßen Verfahrens wird das chromhaltige Trägergel (2) aktiviert. Methodisch gesehen weist diese Aktivierung keine Besonderheiten auf, sondern kann nach den aus der DE-A 15 20 467 bekannten Methoden erfolgen. Vorteilhafterweise wird hierbei das chromhaltige Trägergel (2) in einem wasserfreien, Sauerstoff in einer Konzentration von über 10 Vol-% enthaltenden Gasstrom während 10 bis 1000 Minuten, insbesondere während 150 bis 750 Minuten auf 400 bis 1100, insbesondere auf 500 bis 800°C erhitzt und danach auf Raumtemperatur abgekühlt, wodurch der Trägerkatalysator resultiert.

Im Verfahrensschritt (3) kann außerdem noch mindestens eine der vorstehend genannten anorganischen fluoridhaltigen Verbindungen auf die noch vorhandenen chromhaltigen Trägergele (2) oder die bereits vorhandenen Teilchen des Trägerkatalysators in üblicher und bekannter Weise in einer Menge von bis zu 10 Gew.-%, bezogen auf den erfindungsgemäßen Trägerkatalysator (3), aufgetragen werden. Vorteilhafterweise werden die Fluoride hierbei als Feststoffe aufgetragen.

Vorteilhafterweise hat der in erfindungsgemäßer Verfahrensweise erhaltene Trägerkatalysator einen Chromgehalt von 0,5 bis 3,0, insbesondere von 0,7 bis 1,5 Gew.-%, und kann direkt für die Polymerisation von α-Olefinen nach den üblichen Verfahren verwendet werden.

Unabhängig davon, ob es sich bei diesen bekannten Polymerisationsverfahren um diskontinuierliche oder kontinuierliche Suspensionspolymerisationsverfahren, Lösungspolymerisationsverfahren oder Gasphasenpolymerisationsverfahren im gerührten oder gewirbelten Festbett handelt, liefert der Katalysator α-Olefinpolymerisate mit ausgezeichnetem anwendungstechnischem Eigenschaftsprofil. Besondere Vorteile weist der Trägerkatalysator bei der Herstellung von grießförmigen Ethylenhomopolymerisaten und von Copolymerisaten des Ethylens mit untergeordneten Mengen an einpolymerisierten C₃- bis C₁₂-α-Monoolefinen auf. Polymerisationsverfahren mit Hilfe dieses Trägerkatalysators werden vorteilhaft bei Temperaturen von 70 bis 150°C und Drücken von 2 bis 150 bar durchgeführt.

Die mit Hilfe des Trägerkatalysators erhältlichen Polymerisate von α-Olefinen zeichnen sich u.a. durch eine hohe Molmasse, charakterisiert durch Grenzviskositäten von 300 bis 600 cm³/g, eine gute Verarbeitbarkeit und eine sehr hohe Schüttdichte aus. Die sphärische Form des Trägerkatalysators findet sich dabei überraschenderweise auch in den anfallenden Polymerpartikeln wieder, die sich insbesondere auch durch eine gute Morphologie auszeichnen.

Der Schmelzflußindex der daraus resultierenden Polymerisate, bei 190°C und unter einem Gewicht von 2,16 kg (nach DIN 53 735) liegt üblicherweise bei 0,01 bis 1 g/10 min., insbesondere bei 0,1 bis 0,5 g/10 min. (MFI). Bei höherer Belastung, d.h. einem Gewicht von 21,6 kg anstelle von 2,16 kg, beträgt der Schmelzflußindex im allgemeinen 0,5 bis 20 g/10 min., insbesondere 1,0 bis 20 g/10 min. (HLMI). Daraus resultiert ein Schmelzflußverhältnis (HLMI/MFI) von etwa 20 bis 200, insbesondere von 50 bis 200.

Darüber hinaus zeichnet sich der Trägerkatalysator auch durch eine im Vergleich zum Stand der Technik bemerkenswert hohe Produktivität aus.

Die mit Hilfe des Trägerkatalysators hergestellten Polymerisate von α-Olefinen eignen sich vor allem für die Herstellung von Folien und Formteilen nach dem Folienblas- und Blasform-Verfahren. Hierbei weisen bereits die ohne vorangegangene Homogenisierung direkt aus Polymerisatgrieß hergestellten Polymerisate eine hohe Schockzähigkeit auf. Außerdem eignen sich die mit Hilfe des Katalysators hergestellten Homo- und Copolymerisate des Ethylens hervorragend für die Herstellung von Behältern mit Gefahrgutzulassung.

### Beispiele und Vergleichsversuche

Die Herstellung des Trägerkatalysators mit Hilfe des erfindungsgemäßen Verfahrens und seine Verwendung zur Polymerisation von Ethylen

### Beispiel 1

### Versuchsvorschrift:

### 1.1 Die Herstellung des Trägergels (1)

Für die Herstellung des Trägergels (1) wurde eine in der Figur der US-A 38 72 217 dargestellte Mischdüse der folgenden Abmessungen benutzt: der Durchmesser der zylindrischen, aus einem Kunststoffschlauch gebildeten Mischkammer betrug 14 mm, die Mischraumlänge (einschließlich der Nachmischstrecke) lag bei 350 mm. Nahe der stirnseitig verschlossenen Eintrittsseite der Mischkammer war eine tangentiale Einlaufbohrung von 4 mm Durchmesser für die Mineralsäure angebracht. Es schlossen sich vier weitere Bohrungen mit ebenfalls 4 mm Durchmesser und gleicher Einlaufrichtung für die Wasserglaslösung an, wobei der Abstand der Bohrungen voneinander, in Längsrichtung der Mischkammer gemessen, 30 mm betrug. Für die primäre Mischzone war demnach das Verhältnis von Länge zu Durchmesser in etwa gleich 10:1. Für die sich anschließende sekundäre Mischzone lag dieses Verhältnis bei 15:1. Als Spritzmundstück wurde ein flachgedrücktes, leicht nierenförmig ausgebildetes Rohrstück über das Austrittsende des Kunststoffschlauchs geschoben.

Diese Mischvorrichtung wurde mit 325 l/h 33 gew.-%iger Schwefelsäure von 20°C mit einem Betriebsdruck von ca. 3 bar sowie 1100 l/h Wasserglaslösung (hergestellt aus technischem Wasserglas mit 27 Gew.-% SiO₂ und 8 Gew.-% Na₂O durch Verdünnen mit Wasser) mit einem Litergewicht von 1,2 kg/l und einer Temperatur von gleichfalls 20°C mit einem Druck von ebenfalls ca. 3 bar beschickt. In der mit dem Kunststoffschlauch ausgekleideten Mischkammer wurde durch fortschreitende Neutralisation ein unbeständiges Hydrosol mit einem pH-Wert zwischen 7 und 8 gebildet, welches bis zur vollständigen Homogenisierung noch etwa 0,1 Sekunden in der Nachmischzone verblieb, bevor es durch das Düsenmundstück als flächenförmiger Flüssigkeitsstrahl in die Atmosphäre gespritzt wurde. Der Strahl zerteilte sich während des Flugs durch die Luft in einzelne Tropfen, welche infolge der Oberflächenspannung in eine weitgehend kugelige Form übergingen und noch während ihres Flugs innerhalb ca. 1 Sekunde zu Hydrogel-Kugeln erstarrten. Die Kugeln hatten eine glatte Oberfläche, waren glasklar, enthielten etwa 17 Gew.-% Siliciumdioxid und hatten folgende Kornverteilung:

| | |
|---|---|
| > 8 mm | 10 Gewichtsprozent |
| 6-8 mm | 45 Gewichtsprozent |
| 4-6 mm | 34 Gewichtsprozent |
| < 4 mm | 11 Gewichtsprozent |

Die Hydrogel-Kugeln wurden am Ende ihres Fluges in einem Waschturm aufgefangen, welcher nahezu vollständig mit Hydrogel-Kugeln gefüllt war und worin die Kugeln sofort ohne Alterung mit in etwa 50°C warmem, schwach ammoniakalischem Wasser in einem kontinuierlich verlaufenden Gegenstromprozeß salzfrei gewaschen wurden.

Im Anschluß daran wurden die Kugeln in einer Mühle auf einen Durchmesser von weniger als 2 mm zerkleinert und mit Wasser zu einer niederviskosen Suspension vermengt.

Das auf diese Weise erhaltene zerkleinerte Hydrogel wurde dann in einen formgebenden Sprühtrockner eingebracht, der eine Länge von 2 Metern und einen Rohrdurchmesser von 0,6 Metern aufwies. Der formgebende Sprühtrockner wurde mit einem Gasdurchsatz von 1400 kg/h betrieben. Das Einbringen des Hydrogels erfolgte über einen rotierenden Düsenspalt bei 120°C. Die Trocknungszeit des Hydrogels betrug etwa 2 Sekunden. Das daraus resultierende Trägergel wurde anschließend in einem Zyklon abgeschieden.

### 1.2 Die Herstellung des Trägerkatalysators

15 kg des vorstehend beschriebenen Trägergels (1) und 40 1 einer 4,1 gew.-%igen Lösung von Chrom(III)nitrat-9-hydrat in Ethanol wurden in einen Doppelkonusmischer gefüllt. Unter Rotation des von außen mit Dampf auf 130°C beheizten Mischers wurde dann im Wasserstrahlvakuum das Ethanol abdestilliert.

Das hierbei resultierende chromhaltige Trägergel (2) wurde in einem Fließbett, welches von Luft durchströmt wurde, während 6 Stunden auf 600°C erhitzt und danach wieder abgekühlt. Beim Abkühlvorgang nach dieser Aktivierung wurde ab dem Erreichen einer Temperatur von 140°C das Fließbett mit Stickstoff gespült, um Sauerstoffspuren, welche bei der Polymerisation stören, zu beseitigen.

Der resultierende Trägerkatalysator hatte einen elementaranalytisch ermittelten Chromgehalt von 2 x 10⁻⁴mol/g.

### 1.3 Die Polymerisation von Ethylen mit Hilfe des Trägerkatalysators

Ein 1 1-Druckautoklav wurde auf 95°C aufgeheizt, mehrmals mit Ethylen gespült und unter Rühren mit insgesamt 500 ml Isobutan gefüllt. Nachdem die gewünschte Polymerisationstemperatur von 95°C erreicht war, wurden 67 mg des aus dem Abschnitt 1.2. erhaltenen Trägerkatalysators mit Ethylen, das unter einem Druck von 25 bar stand, in den Autoklaven eingeleitet. Danach wurde so lange weiteres Ethylen eingeleitet, bis der gewünschte Polymerisationsdruck von 40 bis 42 bar erreicht war. Während der eigentlichen Polymerisation wurde der Druck im Autoklaven durch Nachdosieren von Ethylen in diesem Druckbereich gehalten. Nach insgesamt 90 Minuten wurde die Polymerisation durch Entspannen abgebrochen.

Bei diesem Versuch erhielt man 285 g Polyethylen. Die Produktivität des dabei verwendeten Katalysators sowie die Schüttdichte, der Staudinger-Index und der Schmelzflußindex (HLMI) des erhaltenen Polyethylens können der nachfolgenden Tabelle entnommen werden.

### Beispiel 2

Analog dem Beispiel 1 wurde ein Katalysator hergestellt, jedoch wurde im Herstellungsschritt (1.2) während der Trägerung mit Chrom(III)nitrat-9-hydrat und noch vor der Aktivierung zusätzlich 2,5 Gew.-%, bezogen auf den Träger, an Ammoniumhexafluorosilikat hinzugesetzt. Die anschließende Polymerisation erfolgte wie im Beispiel 1 beschrieben.

Bei diesem Versuch erhielt man 250 g Polyethylen. Die Produktivität des dabei verwendeten Katalysators sowie die Schüttdichte, der Staudinger-Index und der Schmelzflußindex (HLMI) des erhaltenen Polyethylens können der nachfolgenden Tabelle entnommen werden.

### Vergleichsversuch A

Die Herstellung eines Trägerkatalysaotrs gemäß der EP-A-0 535 516 und seine Verwendung zur Polymerisation von Ethylen:
Das erfindungsgemäße Beispiel 1 wurde wiederholt, wobei die Trocknung im Herstellungsschritt 1.2 nicht in einem formgebenden Sprühtrockner, sondern in einem Rohrtrockner mit einer Rohrlänge von 5 Metern, einem Rohrdurchmesser von 0,8 Metern und einer Eingangstemperatur von 400°C durchgeführt wurde.

Bei einem Versuch erhielt man 230 g Polyethylen. Die Produktivität des dabei verwendeten Katalysators sowie die Schüttdichte, der Staudinger-Index und der Schmelzflußindex (HLMI) des erhaltenen Polyethylens können der nachfolgenden Tabelle entnommen werden.

### Vergleichsversuch B

Analog dem Vergleichsversuch A wurde nach der Lehre der EP-A-0 535 516 ein Katalysator hergestellt und mit dessen Hilfe Ethylen polymerisiert. lm Unterschied zum Vergleichsversuch A wurde im Herstellungsschritt (1.2) während der Trägerung mit Chrom(III)nitrat-9-hydrat und noch vor der Aktivierung zusätzlich 2,5 Gew.-%, bezogen auf den Träger, an Ammoniumhexafluorosilikat hinzugesetzt. Die anschließende Polymerisation erfolgte wie im Beispiel 1 beschrieben.

Bei diesem Versuch erhielt man 250 g Polyethylen. Die Produktivität des dabei verwendeten Katalysators sowie die Schüttdichte, der Staudinger-Index und der Schmelzflußindex (HLMI) des erhaltenen Polyethylens können der nachfolgenden Tabelle entnommen werden.

**Tabelle**

| | Beispiel | | Vergleichsversuch | |
|---|---|---|---|---|
| | 1 | 2 | A | B |
| Produktivität | 4.250 | 4.300 | 3.150 | 3.800 |
| [g erhaltenes Polymerisat/g Katalysator] | | | | |
| Schüttdichte ^{a)} | 330 | 370 | 260 | 280 |
| [g/l] | | | | |
| Staudinger-Index ^{b)} | 530 | 580 | 520 | 580 |
| [cm³/g] | | | | |
| Schmelzflußindex ^{c)} | 1,4 | nicht bestimmt | 1,6 | nicht bestimmt |

| | | | | |
|---|---|---|---|---|
| a) nach DIN 53 468 | | | | |
| b) nach DIN 53 728 | | | | |
| c) High Load Melt Index [HLMI], nach DIN 53 735, bei 190°C und einem Gewicht von 21,6 kg | | | | |

Die nach den erfindungsgemäßen Beispielen 1 und 2 erhaltenen Polyethylene weisen eine hohe Schüttdichte, eine hohe Molmasse und nur geringe Feinkornanteile auf. Der dabei eingesetzte Katalysator zeichnet sich u.a. durch eine hohe Produktivität aus, verglichen mit den aus dem Stand der Technik bekannten Katalysatoren (Vergleichsversuche A und B).

## Patentansprüche

1. Verfahren zur Herstellung eines Trägerkatalysators für die Polymerisation von α-Olefinen, bei welchem man
(1) ein Siliciumdioxid enthaltendes Trägergel herstellt, indem man
(1.1) in einen unter Drall stehenden Strom einer wäßrigen Mineralsäure längs sowie tangential zum Strom eine Natrium- cder Kaliumwasserglaslösung einbringt, das dabei entstehende Kieselsäure-Hydrosol in ein gasförmiges Medium tropfenförmig versprüht, zum Hydrogel erstarren läßt und das so erhaltene Hydrogel ohne vorherige Alterung durch Waschen von Salzen befreit,
(1.2) das aus (1.1) resultierende Hydrogel trocknet, wobei die Trägergel-Bildung erfolgt, und
(2) das Trägergel (1) mit Chromtrioxid oder einer unter den Bedingungen des Verfahrensschritts (3) in Chromtrioxid überführbaren Chromverbindung belädt, wodurch ein chromhaltiges Trägergel entsteht, und
(3) das chromhaltige Trägergel (2) In einem wasserfreien, Sauerstoff in einer Konzentration von über 10 Vol.-% enthaltenden Gasstrom während 10 bis 1000 Minuten auf 400 bis 1100°C erhitzt.
dadurch gekennzeichnet, daß man das aus dem Verfahrensschritt (1.1) resultierende Hydrogel im Verfahrensschritt (1.2) innerhalb einer Zeit von nicht mehr als 60 Sekunden in einem formgebenden Sprüh- oder Sprühwirbelschichttrockner bei einer Eingangstemperatur von 80 bis 400°C trocknet.

2. Verfahren nach Anspruch 1, dadurch gekennzeichnet, daß die im Verfahrensschritt (1.1) verwendete wäßrige Mineralsäure Aluminiumionen enthält.

3. Verfahren nach den Ansprüchen 1 oder 2, dadurch gekennzeichnet, daß man das aus dem Verfahrensschritt (1.1) resultierende Hydrogel vor der Trocknung im Verfahrensschritt (1.2) einem weiteren Verfahrensschritt (1.1.1) unterwirft, wobei man aus dem Hydrogel maximal 95 Gew.-% des im Hydrogel enthaltenen Wassers extrahiert.

4. Verfahren nach Anspruch 3, dadurch gekennzeichnet, daß im Verfahrensschritt (1.1.1) die Extraktion des im Hydrogel enthaltenen Wassers mit Hilfe mindestens eines C₁- bis C₄-Alkohols und/oder C₃- bis C₅-Ketons erfolgt.

5. Verfahren nach den Ansprüchen 1 bis 4, dadurch gekennzeichnet, daß man nach der Bildung des Trägergels im Verfahrensschritt (1.2) und noch vor dessen Beladung mit Chromtrioxid oder mit einer in Chromtrioxid überführbaren Chromverbindung im Verfahrensschritt (2) das Trägergel klassiert (1.2.1).

6. Verfahren nach den Ansprüchen 1 bis 5, dadurch gekennzeichnet, daß die aus dem Verfahrensschritt (1.2) oder (1.2.1) erhaltenen Trägergele eine sphärische Form mit einem Durchmesser von 10 bis 300 µm, einer Oberfläche von 100 bis 1000 m²/g und einem Porenvolumen von 0,5 bis 2,5 cm³/g aufweisen.

7. Verfahren nach den Ansprüchen 1 bis 6, dadurch gekennzeichnet, daß man das aus dem Verfahrensschritt (1) erhältliche Trägergel im Verfahrensschritt (2) noch zusätzlich mit anorganischen, fluoridhaltigen Verbindungen belädt.

## Claims

1. A process for the preparation of a supported catalyst for the polymerization of α-olefins, in which
(1) a silicon dioxide-containing support gel is prepared by
(1.1) introducing a sodium water glass or potassium water glass solution into a swirling stream of an aqueous mineral acid longitudinally and tangentially to the stream, spraying the resultant silica hydrosol in drop form into a gaseous medium and allowing it to solidify to form a hydrogel, and freeing the resultant hydrogel from salts by washing without prior ageing,
(1.2) drying the hydrogel resulting from (1.1) to form the support gel,
(2) the support gel (1) is charged with chromium trioxide or a chromium compound which can be converted into chromium trioxide under the conditions of process step (3), giving a chromium-containing support gel, and
(3) the chromium-containing support gel (2) is heated at from 400 to 1100°C for from 10 to 1000 minutes in an anhydrous gas stream containing oxygen in a concentration of greater than 10% by volume,
which comprises drying the hydrogel resulting from step (1.1) in step (1.2) within a time of not more than 60 seconds in a shaping spray dryer or spray fluidized bed dryer at an inlet temperature of from 80 to 400°C.

2. A process as claimed in claim 1, wherein the aqueous mineral acid used in step (1.1) contains aluminum ions.

3. A process as claimed in claim 1 or 2, wherein the hydrogel resulting from step (1.1) is, before the drying in step (1.2), subjected to a further step (1.1.1) in which a maximum of 95% by weight of the water present in the hydrogel is extracted.

4. A process as claimed in claim 3, wherein the extraction of the water present in the hydrogel which is carried out in step (1.1.1) is carried out with the aid of at least one C₁- to C₄-alcohol and/or C₃- to C₅-ketone.

5. A process as claimed in any one of claims 1 to 4, wherein the support gel is classified (1.2.1) after it has been formed in step (1.2) and before it has been charged in step (2) with chromium trioxide or a chromium compound which can be converted into chromium trioxide.

6. A process as claimed in any one of claims 1 to 5, wherein the support gel obtained in step (1.2) or (1.2.1) has a spherical shape with a diameter of from 10 to 300 µm, a surface area of from 100 to 1000 m²/g and a pore volume of from 0.5 to 2.5 cm³/g.

7. A process as claimed in any one of claims 1 to 6, wherein the support gel obtainable from step (1) is additionally charged, in step (2), with inorganic, fluoride-containing compounds.

## Revendications

1. Procédé pour la préparation d'un catalyseur sur support pour la polymérisation d'α-oléfines, dans lequel
(1) on prépare un gel support contenant du dioxyde de silicium, en
(1.1) introduisant dans un courant en rotation d'un acide minéral aqueux, longitudinalement ainsi que tangentiellement par rapport au courant, une solution d'orthosilicate de sodium ou de potassium, pulvérisant en forme de gouttes dans un milieu gazeux l'hydrosol d'acide silicique ainsi formé, laissant se solidifier en un hydrogel et débarrassant des sels, sans vieillissement préalable, par lavage, l'hydrogel ainsi formé,
(1.2) séchant l'hydrogel résultant de (1.1), formant ainsi le gel support, et
(2) on charge le gel support (1) avec du trioxyde de chrome ou un composé du chrome pouvant être transformé en trioxyde de chrome dans les conditions de l'étape opératoire (3), ce qui donne un gel support contenant du chrome, et
(3) on chauffe le gel support contenant du chrome (2) dans un courant gazeux contenant de l'oxygène anhydre à une concentration supérieure à 10 % en volume, pendant 10 à 1000 minutes, à 400 à 1100°C,
caractérisé par le fait qu'on sèche l'hydrogel résultant de l'étape opératoire (1.1) dans l'étape opératoire (1.2) pendant une durée ne dépassant pas 60 secondes dans un dessiccateur de façonnage avec pulvérisation ou à couche fluidisée avec pulvérisation, à une température d'introduction de 80 à 400°C.

2. Procédé selon la revendication 1, caractérisé par le fait que l'acide minéral aqueux employé dans l'étape opératoire (1.1) contient des ions aluminium.

3. Procédé selon l'une des revendications 1 ou 2, caractérisé par le fait qu'on soumet l'hydrogel résultant de l'étape opératoire (1.1), avant le séchage dans l'étape opératoire (1.2), à une autre étape opératoire (1.1.1), dans laquelle on extrait, de l'hydrogel, au maximum 95 % en poids de l'eau contenue dans l'hydrogel.

4. Procédé selon la revendication 3, caractérisé par le fait que dans l'étape opératoire (1.1.1) on effectue l'extraction de l'eau contenue dans l'hydrogel au moyen d'au moins un alcool en C₁ à C₄ et/ou d'au moins une cétone en C₃ à C₅.

5. Procédé selon l'une quelconque des revendications 1 à 4, caractérisé par le fait qu'on calibre (1.2.1) le gel support après la formation du gel support dans l'étape opératoire (1.2) et cependant avant sa charge avec du trioxyde de chrome ou un composé du chrome pouvant être transformé en trioxyde de chrome dans l'étape opératoire (2).

6. Procédé selon l'une quelconque des revendications 1 à 5, caractérisé par le fait que les gels supports obtenus à partir de l'étape opératoire (1.2) ou (1.2.1) présentent une forme sphérique avec un diamètre de 10 à 300 µm, une surface de 100 à 1000 m²/g et un volume de pores de 0,5 à 2,5 cm³/g.

7. Procédé selon l'une quelconque des revendications 1 à 6, caractérisé par le fait qu'on charge le gel support pouvant être obtenu à partir de l'étape opératoire (1), dans l'étape opératoire (2), avec en outre des composés inorganiques, contenant des fluorures.
